# EUROPÄISCHE PATENTANMELDUNG

(11) **EP 2 420 942 A1**
(43) Veröffentlichungstag der Anmeldung: **22.02.2012**
(21) Anmeldenummer: 10173594.2
(22) Anmeldetag: 20.08.2010
(51) Int. Cl.: G06F 17/30

(54) **Computerimplementiertes Verfahren zur Verarbeitung von Daten auf einer über das Internet zugänglichen Datenverarbeitungsanlage**

(71) Anmelder: Goette, Florian, 81825 München (DE)
(72) Erfinder: Goette, Florian, 81825 München (DE)
(74) Vertreter: Kirschner, Klaus Dieter

(57) **Zusammenfassung**

Computerimplementiertes Verfahren zur Verarbeitung von Daten auf einer über das Internet zugänglichen Datenverarbeitungsanlage, insbesondere zur Ermittlung und / oder Aktualisierung und / oder Anpassung von Datensätzen, die auf einer über das Internet zugänglichen Datenverarbeitungsanlage (10) abgelegt sind, wobei die Datenverarbeitungsanlage (10) für den Zugriff einer Vielzahl von Benutzern (18, 22) ausgelegt ist, und aufgrund der Begrenztheit der Rechenleistung Beschränkungen für den Zugriff bestehen, und zudem eine Applikation auf der Datenverarbeitungsanlage (10) installiert werden kann, die von Benutzern (18, 22) verwendbar ist, wobei eine Segmentierung der zu verarbeitenden Daten vorgenommen wird, und die zu verarbeitenden Segmente in einem Arbeitsschritt ausführt, und die Arbeitsschritte in einem vorgegebenen zeitlichen Abstand zueinander verarbeitet werden, dadurch gekennzeichnet, dass die Segmentierung derart erstellt wird, dass die von Datenverarbeitungsanlage zur Verfügung gestellte Ressourcen für einen Arbeitsschritt prognostiziert werden, und dass alle im Segment erhaltenen Daten, insbesondere Datensätze mit den zur Verfügung gestellten Ressourcen vollständig abgearbeitet werden können, und die Segmentgröße dennoch möglichst groß gewählt wird.

## Beschreibung

Die Erfindung betrifft ein Verfahren zur Verarbeitung von Daten einer Datenverarbeitungsanlage auf die eine Vielzahl von Nutzern über das Internet Zugriff hat.

Aufgrund der zunehmenden Benutzung des Internets, wird auch die Datenhaltung auf einer insbesondere zentralen, über das Internet zugänglichen Datenverarbeitungsanlage immer beliebter. Die Datenverarbeitungsanlage kann auch ein System von Datenverarbeitungsanlagen sein. Es gibt Anbieter, die entsprechende Datenverarbeitungsanlagen zur Verfügung stellen und mit einer Plattform ausrüsten, über welche auf die auf der Datenverarbeitungsanlage gespeicherten Daten weltweit zugegriffen werden kann. Diese Daten werden vorzugsweise in Datenbanksystemen verwaltet. Diese Datenbanksysteme stellen beispielsweise Kunden- und Kontaktdaten bereit. Um die Daten des Datenbanksystems zu nutzen, sind auf der auf der Datenverarbeitungsanlage aufgesetzten Plattform Applikationen zur Verarbeitung der Daten installierbar. Über diese Applikationen haben im Allgemeinen eine Vielzahl von Benutzern Zugriff auf unterschiedliche ihnen zugeordnete Daten, Einzelne Benutzer müssen jedoch eine große Anzahl von Daten verarbeiten, was einen massiven Datenverarbeitungsaufwand zur Folge hat. Im Wesentlichen werden zu bearbeitende Daten mit zu vergleichenden Daten verglichen und Unterschiede ermittelt.

Aufgrund der Begrenztheit der Ressourcen sind dem Benutzer Beschränkungen auferlegt. Diese Beschränkungen beruhen letztlich auf der Zuweisung von verfügbaren Ressourcen an einen Benutzer zur Verarbeitung von Daten, die der Benutzer für die Verarbeitung zur Verfügung hat. In der Regel führt eine Überschreitung der zugewiesen Ressourcen zum Abbruch des gesamten Arbeitsschritts, was wiederum dazu führt, dass alle Datenoperationen aus dem abgebrochenen Arbeitsschritt rückgängig gemacht werden. Auf diese Weise wird eine massive Datenverarbeitung verhindert und dafür Sorge getragen, dass jedem Benutzer ausreichende Ressourcen und Antwortzeiten zur Verfügung stehen und die Datenverarbeitungsanlage nicht überlastet wird. Zur Benutzung stellt die Datenverarbeitungsanlage eine Plattform bereit, mit der eine grundlegende Funktionalität der Plattform vorgegeben ist. Auf dieser Plattform sind zur Datenverarbeitung Applikationen installierbar, über die der Benutzer unter Berücksichtigung der ressourcenbedingten Restriktionen eine Datenverarbeitung vornehmen kann.

Es ist Aufgabe der Erfindung ein Verfahren bereitzustellen, das eine große Datenmenge im Rahmen der zur Verfügung stehenden Ressourcen verarbeiten kann und flexibel auf Nutzeranforderungen auslegbar ist. Insbesondere soll eine Konsolidierung, Normalisierung und Dublettenerkennung auf einer über das Internet zugänglichen zentralen Datenverarbeitungsanlage durchführbar sein.

Die Aufgabe wird durch die kennzeichnenden Merkmale des Anspruchs 1 in Verbindung mit seinen Oberbegriffsmerkmaien gelöst.

Die Unteransprüche bilden vorteilhafte Weiterbildungen der Erfindung.

In bekannter Weise umfasst ein computerimplementiertes Verfahren zur Verarbeitung von Datensätzen eine sequentielle Abarbeitung einer Anweisungsliste zur Bearbeitung. Die Datensätze sind auf einer über das Internet zugänglichen Datenverarbeitungsanlage abgelegt. Die Datenverarbeitungsanlage ist für den Zugriff einer Vielzahl von Benutzern ausgelegt, wobei den Benutzern die Ressourcen der Datenverarbeitungsanlage zur Verfügung gestellt werden. Bei dem computerimplementierten Verfahren werden Anweisungen zur Verarbeitung von Datensätzen derart ausgestaltet, dass die Menge der zu bearbeitenden Datensätze segmentiert wird. Alle Datensätze des Segments müssen mit zu vergleichenden Daten verglichen werden. Die zu vergleichenden Daten werden dafür in Pakete eingeteilt, wobei alle Datensätze eines Pakets mit allen Datensätzen eines Segments verglichen werden. Die gesamte Menge der zu bearbeitenden Datensätze wird in Segmente eingeteilt und alle zu vergleichenden Datensätze werden in Pakete eingeteilt, wobei der Vergleich des Segments mit einem Paket in zeitlich beabstandeten Arbeitsschritten je Paket abgearbeitet. Sind alle Datensätze eines Segments abgearbeitet, wird sofern vorhanden das nächste Segment mit den Paketen der zu vergleichenden Datensätze abgeglichen.

Erfindungsgemäß, wird die Größe der Pakete an die zur Verfügung gestellten Ressourcen angepasst. Dabei erfolgt die Wahl der Paketgröße als auch der zu vergleichenden Daten derart, dass alle Datensätze eines Segments mit allen Datensätzen eines Pakets mit den zur Verfügung gestellten Ressourcen verglichen werden kann, und trotzdem die Segmente und die Pakete möglichst groß gewählt sind.

Auf diese Weise wird auch eine massive Datenverarbeitung, bei der eine Vielzahl von Datensätzen abgearbeitet werden, trotz begrenzt zur Verfügung stehender Ressourcen ermöglicht, die in einer relativ kurzen Zeit abgearbeitet werden können.

Die zur Verfügung stehenden Ressourcen können für das jeweilige System zur Laufzeit, insbesondere in Form der Beschränkungen abgefragt werden. Die Beschränkungen können sich von einer Platfformversion zur nächsten unterscheiden, weshalb die Erfindung flexibel konfigurierbar und anpassbar gestaltet ist. Ressourcenbeschränkungen gelten auf allen Gebieten der Datenverarbeitung, von der Anzahl der Rechenoperationen, dem benutzbaren Speicher, der abgefragten Datensätze bis zur Anzahl von Verarbeitungsschleifen. Die Ressourcenbeschränkungen sind abhängig von der Platfformversion sowie vom Kontext der Ressourcenanforderung.

Bevorzugt werden Segmentgröße und Paketgröße so aufeinander abgestimmt, dass eine maximale Anzahl von Datensätzen mit möglichst wenig Operationen abgearbeitet werden kann.

Vorzugsweise wird die Größe eines Pakets abhängig von der Segmentgröße dadurch festgelegt, dass ermittelt wird, wie viele Attribute eines Datensatzes überprüft werden müssen. Anschließend wird die Zahl der durchschnittlich notwendigen Operationen zur Bearbeitung der Datensätze prognostiziert. In Anbetracht der aufgrund der zur Verfügung gestellten Ressourcen vorgegebenen Anzahl an ausführbaren Operationen in einem Zeitschritt wird dann die Anzahl der in einem Segment abzuarbeitenden Datensätze festgelegt. Es hat sich gezeigt, das sich so ermittelte Segmentgrößen mit einer sehr hohen Wahrscheinlichkeit abarbeiten lassen und darüber hinaus groß genug sind, dass eine schnelle Bearbeitung gewährleistet ist.

Insbesondere wird zuerst abgefragt, welche Parameter als Randbedingung für die Aktualisierung und die Suche nach Datensätzen gesetzt sind, beispielsweise die Einstellung des Ähnlichkeitsgrades. Auf diese Weise kann der Schwerpunkt benutzerspezifisch angepasst werden. Desweiteren können unterschiedlich optimierte Voreinstellungen für spezielle Situationen verwendet werden, z.B. für den Fall großer Mengen an neuen Datensätzen oder für den Fall großer Mengen an aktualisierten Datensätzen. Ebenso können unterschiedlich optimierte Voreinstellungen je Verarbeitungsart definiert werden, z.B. für die Dublettenerkennung, die Datenkonsolidierung oder die Datennormalisierung. Je Verarbeitungsart wird die Segmentgröße als weiterer Parameter festgelegt, d.h. wie viele zu verarbeitende Datensätze im Rahmen einer Stapelverarbeitung maximal bearbeitet werden sollen. Die

Obergrenze hängt von den aktuellen Beschränkungen der Plattform ab sowie von den maximalen Verarbeitungsschritten pro Datensatz.

Je Verarbeitungsart wird die Paketgröße als weiterer Parameter festgelegt, d.h. wie viele zu vergleichende Datensätze im Rahmen eines Abarbeitungsschrittes der Stapelverarbeitung maximal herangezogen werden sollen. Die Obergrenze hängt von der Segmentgröße, den Beschränkungen der Plattform, sowie von den maximalen Verarbeitungsschritten je zu vergleichendem Datensatz ab und wird entsprechend festgelegt.

Dadurch wird eine besonders zuverlässige Abarbeitung gewährleistet, da keine Arbeitsschritte wiederholt werden müssen, die aufgrund einer zu großen Segmentierung oder Paketierung zur Überschreitung der Beschränkungen durch die zur Verfügung gestellten Ressourcen führen und dadurch abgebrochen und rückgängig gemacht wurden.

Dieses Verfahren ist besonders gut anwendbar, sofern es sich nicht um zeitkritische Prozesse handelt. Mittels dieses Verfahrens können im Hintergrund, ohne dass der Benutzer dadurch beeinträchtigt wird, Datenverarbeitungsschritte nach und nach abgearbeitet werden. Für zeitkritische Prozesse wie z.B. der sofortigen Dublettenprüfung bei Neuanlage eines Datensatzes durch einen Benutzer wird eine zeitoptimierte Variante des obigen Verfahrens verwendet, die nur einen Bruchteil der Ressourcen einer Stapelverarbeitung benötigt, somit in kurzer Zeit ein Ergebnis liefert, welches unter Umständen nur ein vorläufiges Ergebnis ist und ein einem späteren vollständigen Stapelverarbeitungsprozess endgültig ermittelt wird.

In einer bevorzugten Ausführung wird über die Plattform der Zugriff auf die in einer Datenbank gespeicherten Daten ermöglicht. Die Daten sind im Wesentlichen personen- / firmenbezogene Daten mit Attributen wie beispielsweise Name, Umsatzsteuernummer, Anschrift, Land usw. versehen. Diese Attribute können grundsätzlich benutzerspezifisch festgelegt werden.

In einer weiteren vorteilhaften Ausgestaltung werden für die Datenabarbeitung nur Datensätze herangezogen, die inhaltlich geändert wurden. Dazu werden die Datensätze bei der Bearbeitung ihrer Attribute als ,geändert' markiert. Indem nur geänderte Datensätze für eine Segmentierung in Frage kommen, führt dies zu einer grundsätzlichen Reduktion des Arbeitsaufwands, was die Verarbeitungsgeschwindigkeit und Zuverlässigkeit erhöht.

Insbesondere können die für die Paketbildung zur Verfügung stehenden Datensätze dahingehend eingeschränkt werden, indem nur Datensätze bei der Auswahl berücksichtigt werden, die in zumindest einem Attribut mit dem oder den in dem Segment enthaltenen Datensätzen übereinstimmen. Beispielsweise kann ein solches Attribut zur Datensatzwahl das Land des Firmensitzes sein. Diese Attribute können in einer Abfrage vor der Segmentierung variabel eingestellt werden. Die Einschränkung auf identische Attribute, erweist sich vor allem bei einer Überprüfung von Dubletten und der Normalisierung von Datensätzen als ausgesprochen vorteilhaft.

In einer besonders vorteilhaften Ausgestaltung, ist auf der Plattform eine weitere Datenbank, eine Referenzdatenbank zur Verfügung gestellt, die eine Zusammenführung und zentrale Verwaltung von Daten ermöglicht. Dies geschieht dadurch, dass von zumindest einem weiteren System ähnliche Daten, wie sie auf der über das Internet zugänglichen Datenverarbeitungsanlage abgelegt sind, in der Referenzdatenbank der Plattform abgelegt werden. Auch die Daten auf der über das Internet zugänglichen Datenverarbeitungsanlage werden in dieser Referenzdatenbank auf der Plattform hinterlegt. Dies erlaubt einem Benutzer auf einfache Weise Daten mit ähnlichen Strukturen aus verschiedenen Systemen zentral zu verwalten.

Da in dem Fall unterschiedlicher Systeme die Möglichkeit besteht, dass einzelne Datensätze doppelt vorhanden oder leicht unterschiedlich gepflegt sind, ist es besonders sinnvoll die Daten in dieser Referenzdatenbank zu normalisieren und / oder konsolidieren und / oder in einer weiteren Form zu bereinigen. Der Benutzer hat damit die Möglichkeit, abweichende Datenstände systemübergreifend zu erkennen und zu korrigieren. Für die Konsolidierung abweichender Datensätze verwendet die Erfindung konfigurierbare Regeln.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen,

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: schematische Darstellung der Datenverarbeitungsumgebung;
- Fig. 2: und eine Ablaufdiagramm einer sequentiellen Abarbeitung einer Anweisungsliste mit der erfindungsgemäßen Segmentierung.

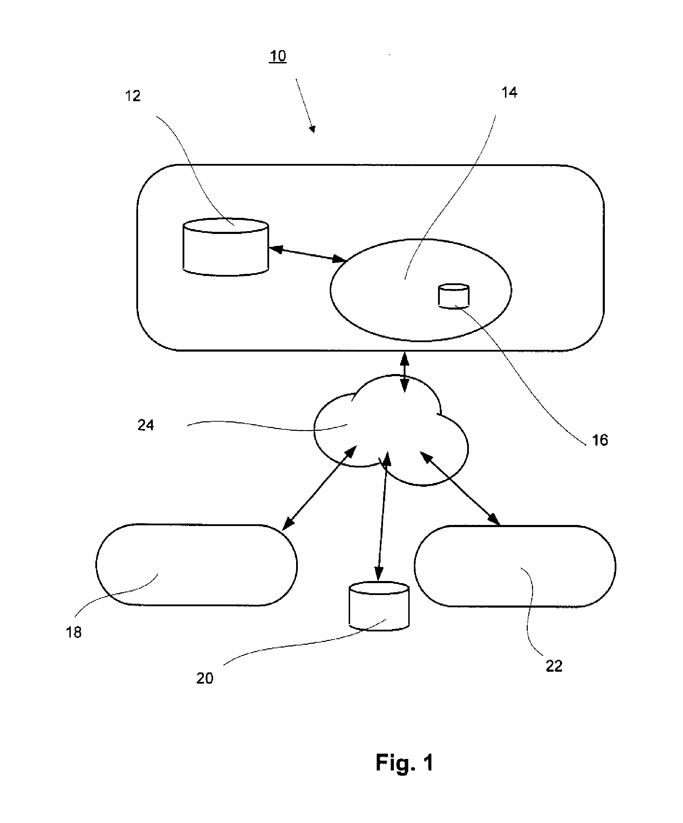

Fig. 1 zeigt schematisch eine zentrale Cloud-Datenverarbeitungsanlage 10. Diese sogenannte Cloud-Datenverarbeitungsanlage 10 ist mit weiteren Datenverarbeitungsanlagen 18, 22 über das Internet 24 verbunden. Die zentrale Cloud-Datenverarbeitungsanlage 10 stellt die notwendigen Ressourcen, sowie eine Plattform 14 zur Verfügung, über die auf ein zentrales Cloud-Datenbanksystem 12, insbesondere Datensätze in einer angebundenen Kundendatenbank, benutzerspezifisch abgelegt und verarbeitet werden können. Die Plattform stellt dabei Grundfunktionen zur Verfügung mittels derer eine Verarbeitung der Datensätze das Datenbanksystems 12 ermöglicht wird.

Die im Cloud-Datenbanksystem 12 abgelegten Datensätze können auf diese Weise von ihren Benutzern, mit Hilfe ihrer Datenverarbeitungsanlagen 18, 22 ausgelesen verwaltet und gepflegt werden. Die Datensätze bestehen im Wesentlichen aus den Attributen Name, Anschrift, Land, Telefonnummer, anderen Kontaktdaten, sowie Schlüsselattributen.

Zusätzlich ist eine weitere Referenzdatenbank 16 vorgesehen, die eine Kombination der Daten aus dem Cloud-Datenbanksystem mit Daten aus zumindest einen weiteren System 20 ermöglicht. Durch diese Kombination von verschiedenen Systemen ist es wahrscheinlich, dass einzelne Datensätze doppelt vorhanden sind und dieselben Firmen/Personen mit unterschiedlichen Adressen geführt sind.

Es gibt bekannte Verfahren um diese Datensätze zu normalisieren, Dubletten zu erkennen, und die Datensätze zu konsolidieren. Gerade bei großen Unternehmen stellt sich das Problem, dass dafür massiv Daten verarbeitet werden müssen.

Da die Cloud-Datenverarbeitungsanlage 10 einem Benutzer nur begrenzt Ressourcen zur Verfügung stellen kann, da sie grundsätzlich einer beliebigen Anzahl von Benutzern zur Verfügung steht, und allen Benutzern entsprechende Ressourcen für eine gleichbleibend performante Nutzung garantieren muss. Diese gemeinsame Nutzung der Ressourcen wird als Multi-Tenancy bezeichnet, wobei jeder Benutzer nur Zugriff auf seine benutzerspezifischen Daten erhält.

Um die Prozessauslastung zu kontrollieren und eine Überbeanspruchung der Infrastruktur der Cloud-Datenverarbeitungsanlage 10 zu vermeiden, werden Beschränkungen für die Ausführung von Programmen auferlegt. Diese können insbesondere in Form von ,Governor Limits' bestehen. Dadurch wird beispielsweise die Anzahl der ausführbaren Operationen in einem Zeitschrift begrenzt. Eine Stapelverarbeitung kann beispielsweise einmal pro Stunde ausgelöst werden, wobei ein Arbeitsschritt eines Stapelverarbeitungslaufs alle 2 Sekunden ausgelöst werden kann, jedoch nicht mehr als 10.000 Operationen umfassen darf.

Zur massiven Abarbeitung von Datensätzen werden diese zu Segmenten zusammengefasst und es wird in einem Stapelverarbeitungslauf genau dieses Segment vollständig stapelweise abgearbeitet, wobei die Datensätze des Segments mit den Datensätzen zumindest eines Pakets verglichen werden

Dafür wird von der Plattform 14 eine Funktion zur Stapelverarbeitung zur Verfügung gestellt, wobei durch die Segmentierung der Datensätze in Kombination mit der zur Verfügung gestellten Stapelverarbeitung komplexe und über einen längeren Zeitraum ausführbare Datenabarbeitung grundsätzlich ermöglicht wird.

Die Segmentgröße und die Paketgröße werden erfindungsgemäß so bestimmt, dass alle vorgesehenen Datensätze der Referenzdatenbank 16 mit den zur Verfügung gestellten Ressourcen in einem Stapelverarbeitungslauf vollständig abgearbeitet, bzw. abgeglichen werden können, und dass ausreichend kleine, aber dennoch möglichst große Segmente und Pakete zusammengestellt werden. Dieses Verfahren wird in Fig, 2 näher beschrieben.

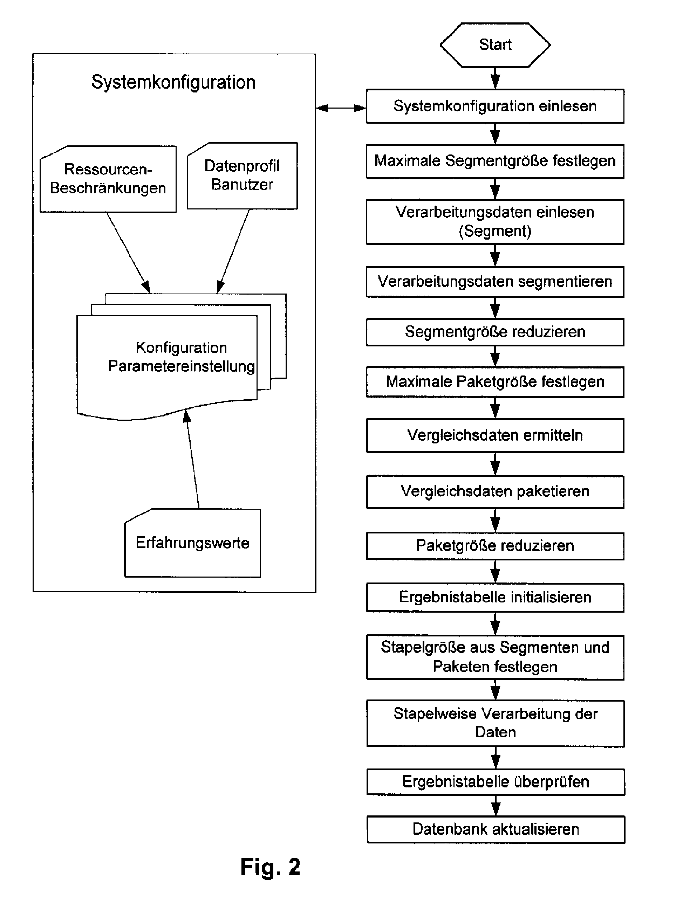

Fig. 2 zeigt ein Flussdiagramm, welches das Verfahren zur Segmentierung und der letztendlichen Datenverarbeitung zeigt.

Im vorliegenden Fall wird zuerst die Systemkonfiguration eingelesen und davon abhängig die Zahl der möglichen Operationen pro Arbeitsschritt ermittelt, die durch die Gegebenheiten der Datenverarbeitungsanlage aufgrund der vorliegenden Governor Limits auf 10.000 beschränkt ist.

Anhand von Berechnungen und eines Massendatentests wird prognostiziert, dass für einen Datensatz mit 10 Attributen, bei dem lediglich die Attribute Namen und Land auf eine Ähnlichkeit von 96 % überprüft werden, in etwa 200 Operationen für eine Konsolidierung eines Datensatzes benötigt werden.

Entsprechend ergibt sich in diesem beispielhaften Fall eine maximal ermittelte Paketgröße von 50 Datensätzen, bei einer Segmentgröße von einem Datensatz.

Analog zur Ermittlung der Paketgröße wird die Segmentgröße ermittelt. Hierfür werden jedoch andere Governor Limits angesetzt, z.B. die max. Listengröße oder die max, Speichergröße.

Falls es sich um eine reine Überprüfung eines bereits bestehenden Datenbankinhalts handelt, werden für die für die Segmentbildung zur Verfügung gestellten Datensätze lediglich die als geändert markierten Datensätze verwendet, jedoch maximal so viele Datensätze eingelesen, wie durch die max, Segmentgröße vorgegeben.

Das so erhaltene Segment an geänderten Datensätzen wird anschließend optimiert um die Anzahl der notwendigen Operationen weiter zu verringern. Gegebenenfalls wird die Segmentgröße weiter reduziert, falls spezielle Konstellationen im Segment vorhanden sind, die zu einer Überschreitung der Governor Limits führen könnten.

Nun werden alle in Frage kommenden Vergleichsdatensätze ermittelt und optimiert um die Anzahl der notwendigen Operationen weiter zu verringern

Anschließend wird die Paketgröße so gewählt, dass in einem Stapel alle Pakete an zu vergleichenden Datensätze abgearbeitet werden können.

Anschließend werden die Aufgaben stapelweise abgearbeitet und die Ergebnisliste aktualisiert. Kommt es innerhalb eines Stapels zur Überschreitung eines Governor Limits, so muss die gesamte Stapelverarbeitung vollständig abgebrochen werden.

Sind alle Stapel abgearbeitet, so wird das Ergebnis überprüft, ggfs. korrigiert und in der Datenbank gespeichert. Die Stapelverarbeitung ist somit abgeschlossen und das gesamte Segment an Datensätzen vollständig verarbeitet worden.

### Bezugszeichenliste

- 10: Cloud Datenverarbeitungsanlage
- 12: Cloud-Datenbanksystem
- 14: Plattform
- 16: Referenzdatenbank
- 18: Datenverarbeitungsanlage
- 20: Datenbanksystem
- 22: Datenverarbeitungsanlage
- 24: Internet

## Patentansprüche

1. Computerimplementiertes Verfahren zur Verarbeitung von Daten auf einer über das Internet zugänglichen Datenverarbeitungsanlage, insbesondere zur Ermittlung und / oder Aktualisierung und / oder Anpassung von Datensätzen, die auf einer über das Internet zugänglichen Datenverarbeitungsanlage (10) abgelegt sind, wobei die Datenverarbeitungsanlage (10) für den Zugriff einer Vielzahl von Benutzern (98, 22) ausgelegt ist, und aufgrund der Begrenztheit der Rechenleistung Beschränkungen für den Zugriff bestehen, und zudem eine Applikation auf der Datenverarbeitungsanlage (10) installiert werden kann, die von Benutzern (18, 22) verwendbar ist, wobei eine Segmentierung der zu verarbeitenden Daten vorgenommen wird, und die zu verarbeitenden Segmente in einem Arbeitsschritt ausführt, und die Arbeitsschritte in einem vorgegebenen zeitlichen Abstand zueinander verarbeitet werden, **dadurch gekennzeichnet, dass** die Segmentierung derart erstellt wird, dass die von Datenverarbeitungsanlage zur Verfügung gestellte Ressourcen für einen Arbeitsschritt prognostiziert werden, und dass alle im Segment erhaltenen Daten, insbesondere Datensätze mit den zur Verfügung gestellten Ressourcen vollständig abgearbeitet werden können, und die Segmentgröße dennoch möglichst groß gewählt wird.

2. Verfahren nach Anspruch 1, **dadurch gekennzeichnet, dass** die Datensätze der Segmente mit Vergleichsdatensätzen verglichen werden, wobei die Vergleichsdatensätze in Paketen zusammengefasst werden.

3. Verfahren nach Anspruch 2, **dadurch gekennzeichnet, dass** in einer Stapelverarbeitung Aufgaben abgearbeitet werden, wobei eine Aufgabe ein Segment und ein Paket umfasst, und die Paket und Segmentgrößen derart gewählt sind, dass insgesamt eine möglichst große Anzahl an Datensätzen verarbeitet werden kann, und dennoch jede Aufgabe abgearbeitet wird.

4. Verfahren nach Anspruch 1, **dadurch gekennzeichnet, dass** zur Auswahl der Segmentgröße und oder der Paketgröße die Anzahl der zu berücksichtigenden Attribute bewertet wird.

5. Verfahren nach einem der vorangehenden Ansprüche, **dadurch gekennzeichnet, dass** die Segmentierung und / oder Paketierung nur geänderte Datensätze berücksichtigt.

6. Verfahren nach einem der vorangehenden Ansprüche, **dadurch gekennzeichnet, dass** die Datenverarbeitung die Konsolidierung von Datensätzen umfasst.

7. Verfahren nach einem der vorangehenden Ansprüche, **dadurch gekennzeichnet, dass** die Datenverarbeitung die Normalisierung der Datensätze umfasst.

8. Verfahren nach einem der vorangehenden Ansprüche, **dadurch gekennzeichnet, dass** zumindest ein Attribut ausschlaggebend für die Bildung des Segments und oder des Pakets ist.

9. Verfahren nach einem der vorangehenden Ansprüche, **dadurch gekennzeichnet, dass** die Randbedingungen für die Segmentierung, insbesondere durch den Benutzer einstellbar sind.

10. Verfahren nach einem der vorangehenden Ansprüche, **dadurch gekennzeichnet, dass** der geforderte Ähnlichkeitsgrad einstellbar ist.

11. Verfahren nach dem Oberbegriff des Anspruchs 1, **dadurch gekennzeichnet, dass** die Applikation eine Datenbank (16) umfasst.

12. Verfahren nach Anspruch 9, **dadurch gekennzeichnet, dass** in die Datenbank neben den Daten aus der zentralen Datenbank (12) der Datenverarbeitungsanlage (10) auch Daten aus zumindest einem extern eingebundenen System(22) eingelesen werden.

## Geänderte Patentansprüche

### Geänderte Patentansprüche gemäss Regel 137(2) EPÜ.

**1.** Computerimplementiertes Verfahren zur Verarbeitung von Daten auf einer über das Internet zugänglichen Datenverarbeitungsanlage, insbesondere zur Ermittlung und / oder Aktualisierung von Datensätzen, die auf einer über das Internet zugänglichen Datenverarbeitungsanlage (10) abgelegt sind, wobei die Datenverarbeitungsanlage (10) für den Zugriff einer Vielzahl von Benutzern (18, 22) ausgelegt ist, und aufgrund der Begrenztheit der Rechenleistung Beschränkungen für den Zugriff bestehen, und zudem eine Applikation zur Verarbeitung von Daten auf der Datenverarbeitungsanlage (10) installiert werden kann, die von Benutzern (18, 22) verwendbar ist, wobei eine Segmentierung der zu verarbeitenden Daten vorgenommen wird, **dadurch gekennzeichnet, dass** die zu verarbeitenden Daten in einem Segment in einem Arbeitsschritt ausführt, und die Arbeitsschritte in einem vorgegebenen zeitlichen Abstand zueinander verarbeitet werden, und dass die Segmentierung derart erstellt wird, dass die von Datenverarbeitungsanlage zur Verfügung gestellte Ressourcen für einen Arbeitsschritt prognostiziert werden, und dass alle im Segment erhaltenen Daten, insbesondere Datensätze mit den zur Verfügung gestellten Ressourcen vollständig abgearbeitet werden können, und die Segmentgröße dennoch möglichst groß gewählt wird.
